# EUROPEAN PATENT SPECIFICATION

(11) **EP 4 482 803 B1**
(45) Date of publication and mention of the grant of the patent: **15.10.2025**
(21) Application number: 23711578.7
(22) Date of filing: 19.02.2023
(51) Int. Cl.: C03B 11/05, A47B 1/00, C03B 11/10

(54) **PROCESS FOR THE MOULING AND PRODUCTION OF HOLLOW GLASS IN PARTICULAR OF A GLASS CAP WITH A SHAPED PROTUBERANCE AND CORRESPONDING MOULDING APPARATUS**
VERFAHREN ZUM FORMEN UND HERSTELLEN VON HOHLGLAS, INSBESONDERE EINER GLASKAPPE MIT GEFORMTEM VORSPRUNG, UND ENTSPRECHENDE FORMVORRICHTUNG
PROCÉDÉ DE MOULAGE ET DE PRODUCTION DE VERRE CREUX, EN PARTICULIER D'UN CAPUCHON EN VERRE À PROTUBÉRANCE FAÇONNÉE, ET APPAREIL DE MOULAGE CORRESPONDANT

(30) Priority: 21.02.2022 IT 202200003137
(43) Date of publication of application: 01.01.2025
(73) Proprietor: Vetreria di Borgonovo SpA, 20123 Milano (IT)
(72) Inventor: PICCIONI, Pier Francesco, 20123 Milano (IT)
(86) International application number: PCT/IT2023/050052
(87) International publication number: WO 2023/157040

(56) References cited:
- EP-A1- 0 861 811
- EP-A1- 2 987 773

## Description

### Field of the invention

The present invention relates in general to the field of moulding and production of glass articles, and more particularly it relates to a new and innovative method or process for the production of hollow glass articles, or generally hollow glass, such as for example a glass cap or stopper exhibiting a hollow area along one side and a shaped protuberance similar to a ring along an opposite side.

The present invention also relates to a corresponding moulding apparatus for moulding and producing a hollow glass article, such as for example a glass cap or stopper having a hollow area along one side and a shaped protuberance along an opposite side, with a through hole, so as to resemble a ring.

### Background of the invention and state of the known art

In the field of the manufacture and moulding of hollow glass articles, that is exhibiting a hollow area, also known synthetically and generically as hollow glass, it has been known for a long time to use the blowing technology, in corresponding blow-blow or press-blow methods or the like implementing such technology.

In more detail, in known methods or processes of the press-blow type, a drop of glass in the fluid state falls and is deposited in a lower preparatory or sketching mould, where the drop undergoes an impression by an upper pressure member or plunger, in order to form a pre-formed or blank or parison, which is then transferred into a finishing mould, where the parison is subjected to the action of a blow of compressed air so as to take on the final shape of the hollow glass article.

On the other hand, in known methods or processes of the blow-blow type, the glass drop in the fluid state falls and is deposited in a lower preparatory or sketching mould, where the drop is subjected to a blow of compressed air so as to form the pre-formed or parison, which is then transferred, as in the case of the press-blow type process, in a finishing mould, where the parison is subject to the action of a further blow of compressed air so as to take on the final form of the hollow glass article.

Therefore, the known machines and apparatuses currently in use in the industry for moulding and producing hollow glass, generally called IS machines (from Individual Section), that is single and separate sections, which implement these known methods, have, in the case of a method of the press-blow type, a section, constituting the parison mould, in which the parison is formed by pressing, and, in the case of a blow-blow method, a section constituting the parison mould, wherein the parison is formed by blowing, and, in both methods or processes, a section, constituting the finishing mould, which, after receiving the parison, receives a blow of compressed air which expands the parison against the surface of the finishing mould so as to blow out the final outer shape of the hollow glass article.

Both these known processes for moulding hollow glass, based on the blowing technology, and the corresponding machines and apparatuses that implement such processes, of the press-blow type and of the blow-blow type, are not, however, free from limits and drawbacks.

In particular, these known methods and processes, which, as stated, typically involve one or more blowing steps, appear rather complex and expensive as management.

Similarly, the corresponding moulding machines and apparatuses which implement these known processes have a considerable constructional complexity and involve a costly maintenance.

Moreover, in addition to this onerous management and construction complexity, these known moulding methods and apparatuses of the press-blow and blow-blow type appear unsuitable or at least require to be improved and made less expensive, as for their management, for the moulding and production of specific hollow glass articles, such as in particular glass stoppers or caps having a hollow area or cavity on one side, and a protuberance or a projection, variously shaped and for example having a through hole to facilitate the manual grip of the cap, on a side opposite to that having said cavity.

For a more complete information on what is already known in the art, there are also cited the following patents, found and examined with a specific search through the main patent databases: JP 2021014392 A, EP 2 740 609 B1, JP 2016117631 A, WO 2014/001347 A1, FR 2978141 A1, EP 2 292 563 A2, KR 19990070670 A, WO 99/26889, US 6,698,241 B1. EP 1 080 046 B1, US 5,888,266, JP H02160628 A, JP S59116133 A, US 3,839,003, GB 339484 A, EP 0 861 811 A1, EP 2 987 773 A1.

In fact, these cited patents, both for their information content and for the sharing of some relevant characteristics and performances of the processes and equipments for the production of glass articles, as described by them, with the process and the related apparatus for the moulding of hollow glass articles, and hollow glass in general, object of the present patent application, appear to well represent the state of the art relating to this process and to this moulding apparatus of the invention.

Moreover, as confirmation of the constant research and innovation activity of the Applicant in the general field of the glass industry, it is pointed out that the same Applicant already owns a significant number of patent rights, constituted in various countries of the world, in this field of glass industry and technology to which the present invention belongs.

In particular, among these patent rights owned by the Applicant, there is cited the Italian patent granted No. 1413281, entitled "ONE-PIECE DIE MOLD FOR MOLDING A GLASS ARTICLE, SUCH AS A SALAD BOWL OR A SIMILAR CONTAINER, HAVING AT LEAST ONE THROUGH HOLE, ASSOCIATED MANUFACTURING EQUIPMENT AND CORRESPONDING MOLDING PROCESS", which relates similarly to the present invention and in particular to the field of equipments and apparatuses and the corresponding processes for moulding and manufacturing a glass article.

### Summary of the invention

Accordingly, in view of the state of the art and the context thereof, as illustrated above, a first object of the present invention is to develop and make available in the glass industry a new process or method and a corresponding apparatus for moulding and producing hollow glass, which advantageously allow to form and mould both the outer shape, including a respective protuberance, and the inner shape, that is the hollow zone, of a hollow glass article, directly and completely by pressure, that is by means of a pressure member in a preparing or preparatory mould, so as to go further and innovate with respect to the traditional blowing technology to form the outer shape and the shape of the hollow area of these hollow glass articles.

A second object, connected to the first one of the present invention is also to provide a new process and a corresponding apparatus in the glass industry which advantageously allow to form and mould, more efficiently than conventional processes and equipments typically based on blowing technology, special and particular hollow glass articles, such as for example a glass stopper or cap having on one side a cavity and on an opposite side a protuberance shaped with a through hole so as to resemble a ring.

A further third object, also connected to the preceding ones, of the present invention, is also to define a process and to realize a corresponding apparatus, for the moulding of hollow glass, which besides being competitive, as regards the running costs, over the conventional methods and processes of the press-blow or blow-blow type, are able to guarantee the same quality, if not to improve it, of the moulded hollow glass articles as produced by such conventional processes and equipment based on the blowing technology.

The above objects are achieved by the new process for the moulding and production of hollow glass and by the corresponding moulding apparatus having the characteristics recited respectively by the independent claims 1 and 5.

Particular embodiments of the new process for the moulding and production of hollow glass and of the corresponding moulding apparatus are defined by the dependant claims.

### Advantages of the invention

There are numerous advantages of the invention, partly already implicitly stated, which are associated with the new process and the related apparatus, proposed by the present invention, for the moulding and production of articles of hollow glass, or hollow glass in general, as for example a cap having a shaped protuberance, such as those listed below, by way of example only:
- a valid and convenient alternative to the conventional methods and processes, of the press-blow and blow-blow type, which typically use blowing technology to mould and form the hollow glass;
- a lower energy consumption and therefore lower management costs than conventional processes and equipments typically based on blowing technology;
- an excellent productivity associated with a high and excellent quality of the hollow glass articles which are produced;
- possibility of making hollow glass articles having particularly complex shapes and configurations, for example with ring-shaped protuberances or similar shapes.

### Brief description of the drawings

These and other objects, features and advantages of the present invention will become apparent from the following description of some preferred embodiments thereof, given by way of non-limiting example, with reference to the attached drawings, wherein:
Fig. 1, divided into sections (a)-(l), is a series of views showing in use an apparatus according to the present invention for moulding and producing a hollow glass article, in particular consisting of a cap having a cavity on a side and a ring-shaped protuberance on an opposite side, and therefore also illustrate the various steps for moulding and producing such article by means of the same moulding and production apparatus;
Fig. 2 is a block operating diagram illustrating a process, according to the present invention and implemented by the apparatus of Fig. 1, for the moulding and production of a hollow glass article, or generally hollow glass;
Fig. 3, divided into sections (a)-(c), shows in plan and in longitudinal section a hollow glass article, made with the method and apparatus of the invention, consisting of a glass cap or stopper having a ring-shaped protuberance; and
Fig . 4, divided into sections (a)-(j), is a series of photographic images showing the various parts of a prototype of the moulding apparatus of the invention, and an example of a hollow glass article, in particular consisting of a cap with a ring-shaped protuberance, moulded and manufactured with such moulding apparatus.

For the sake of completeness, it should be noted that, in the following description of the invention, the reference to a given specific embodiment and application thereof does not exclude that a particular configuration and feature, either structural or operational, described in connection with such a specific embodiment and application, may also be included in other embodiments and applications of the same invention, in which for synthesis reasons it has not been described.

It follows that particular configurations, features, either structural or functional, of the invention can be variously combined in any suitable and coherent manner in one or more embodiments and applications falling within the scope of the invention itself.

It should also be noted that the reference numerals used in the description and the drawings only meet requirements of convenience and therefore do not in any way define the scope of the embodiments and applications of the invention which will be described.

### Description of a preferred embodiment of the process, according to the invention for moulding and production of hollow glass, and of the corresponding moulding and production apparatus

With reference to the drawings, a moulding apparatus according to the present invention for the moulding and production of hollow glass articles, or generally hollow glass, is in the whole indicated by 10.

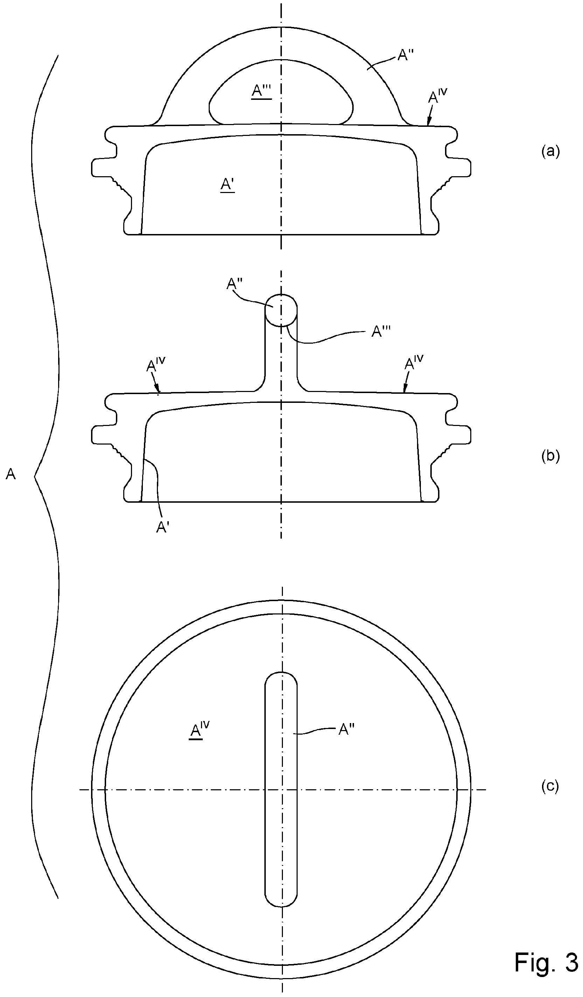

Preferably, but not exclusively, the hollow glass article, indicated by A and shown in detail in Fig. 3, which can be moulded and produced with the moulding apparatus 10 of the invention, is constituted by a glass cap or stopper, exhibiting a hollow area or cavity, indicated by A', along one side, and along an opposite side a shaped protuberance, indicated by A", in turn exhibiting for example a through hole, indicated by A"', so as to resemble a ring.

In detail, the moulding apparatus 10 comprises:
- a preparatory mould, also called preparing mould, designated by the reference numeral 11, which is lower, that is arranged in a lower region of the moulding apparatus 10, wherein this preparatory mould 11 is composed of two parts or halves, respectively 11a, 11b, which can be moved and separated from each other, and has an upper moulding surface 11', that is arranged at the top of the preparatory mould 11, and a cavity 11", formed along said moulding surface 11', respectively defining a portion, designated by A^{lv}, of the outer shape, and the shaped protuberance of the hollow glass article A to be moulded and produced;
- a forming member, indicated by 12, composed of two parts or halves, respectively 12a, 12b, which can be moved and separated from each other, which surmounts and engages the preparatory mould 11;
- a pressing member, also called pressure member or pressure element, designated by the reference numeral 13, also referred to as "plunger", upper, that is arranged in an upper zone of the moulding apparatus 10, therefore above the group and assembly formed by the preparatory mould 11 and the forming member 12, wherein this pressing member 13 is able to move axially in both directions, that is, downwards and upwards, between a raised position and a lowered position with respect to the group formed by the preparatory mould 11 and the forming member 12, in such a way as to cooperate with the same preparatory mould 11 and the same forming member 12 to mould and produce by pressure the hollow glass article A, and in particular to form the respective hollow zone A'; and
- a finishing mould 14, arranged, in the moulding apparatus 10, in a separate and distinct position, alongside the assembly formed by the preparatory mould 11 and the forming member 12.

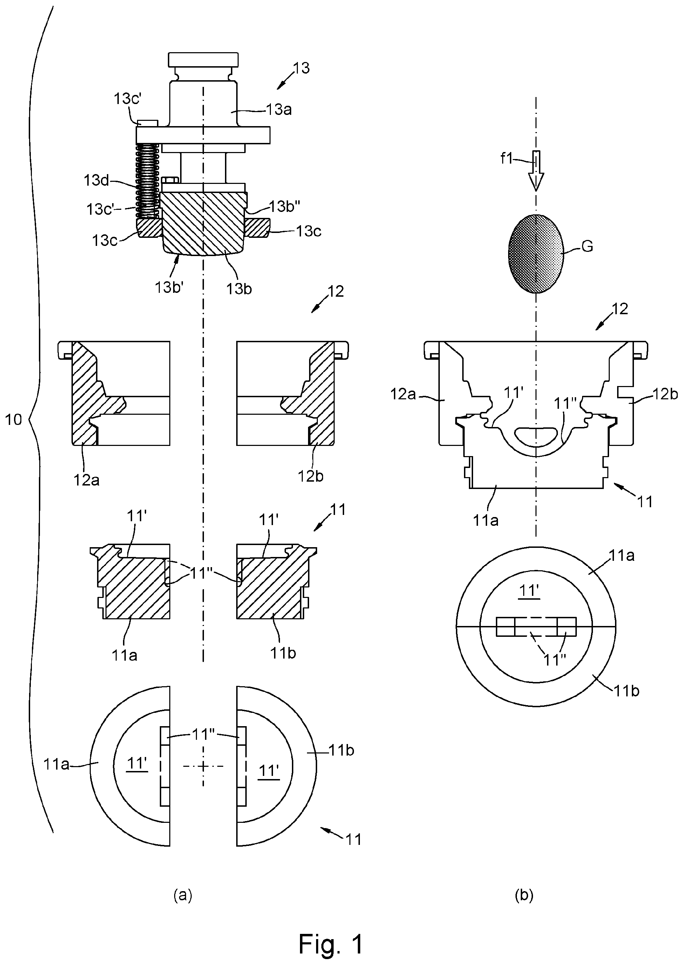

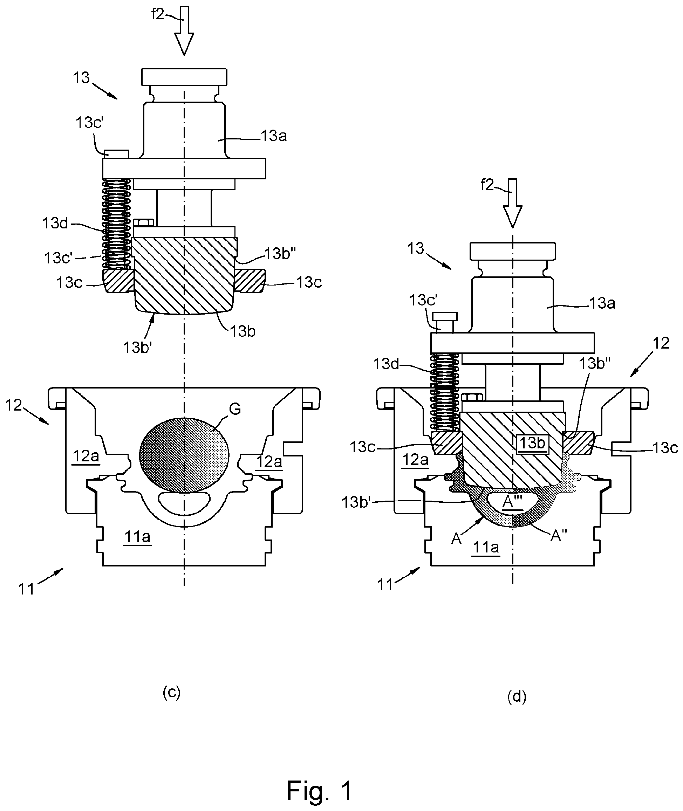

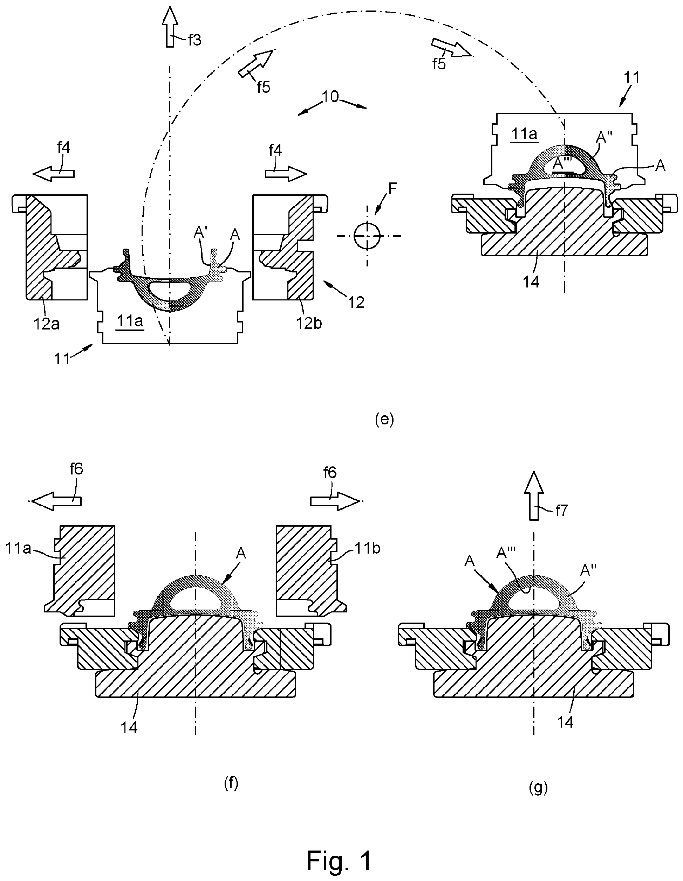

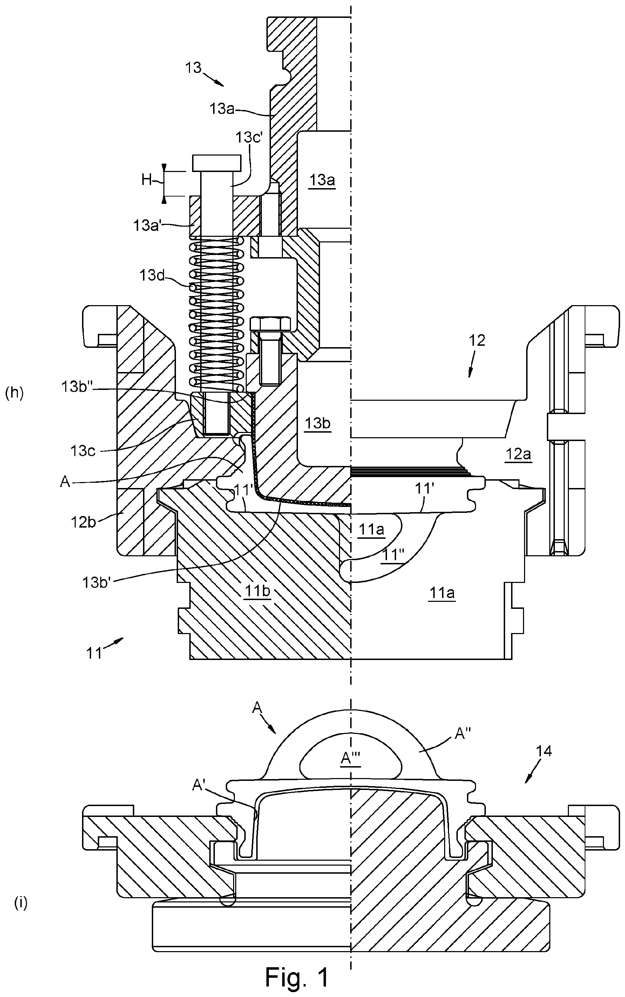

As shown in Fig. 1 - section (a), the cavity 11", formed along the moulding surface 11' of the preparatory mould 11 and corresponding to the shaped protuberance A" of the hollow glass article A to be moulded, is formed on both the two separable parts 11a and 11b, of the same preparatory mould 11, and is configured so as to define the through hole A" of this shaped protuberance A", when these two parts or halves 11a, 11b of the preparatory mould 11 close against each other during moulding of the hollow glass article A, as described below in detail.

The pressing member 13 in turn comprises:
- a support body 13a;
- a forming and pressing body 13b, hereinafter also called synthetically forming body, fixed to and integral with the support body 13a, having a forming surface 13b' adapted to form by pressure the hollow area A' of the hollow glass article A;
- a guide element 13c, in the form of a ring, adapted to guide the forming body 13b; and
- elastic means, for example comprising a compression coil spring 13d, interposed between the guide element 13c and the support body 13a.

The guide element 13c is slidably connected to the support body 13a of the pressure element 13 by means of a plurality of pins 13c', integral with the same guide element 13c, able to slide in corresponding holes formed in a protruding flange 13a' of the support body 13a.

As will be better described below, illustrating the use and operation of the apparatus 10 of the invention, the guide element 13c, included in the pressing member 13, has the function of slidably guiding the forming body 13b, integral with the support body 13a, in a further axial movement of the same forming body 13b, when, during the axial downward movement of the pressing member 13 to close against the preparatory mould 11 and the forming member 12 in order to mould and produce the hollow glass article A, the guiding member 13c encounters, abuts and therefore stops against the forming member 12.

The elastic means 13d, interposed between the guide element 13c and the support body 13a, are configured so as to oppose the sliding of the pins 13c', integral with the guide element 13c, with respect to the support body 12a, when the guide member 13c stops against the forming member 12 during the downward axial movement of the pressing member 13 to close against the forming member 12 and the preparatory mould 11, as described in detail below, while illustrating the use and the operation of the moulding apparatus 10 of the invention.

Therefore, these elastic means 13d, included in the pressure element 13 and interposed between the guide element 13c and the support body 13a of the pressure element 13 itself, have the function of pushing upwards and consequently favouring the axial lifting movement of the group formed by the support body 13a and the forming body 13b, in the step of returning the pressing member 13 from the respective lowered position to the raised position with respect to the preparatory mould 11 and the forming member 12, after moulding and production of the hollow glass article A by means of the apparatus 10 of the invention.

Fig. 1 illustrates at the respective sections (a)-(g) the use and operation of the apparatus 10, according to the present invention, for moulding and production of the hollow glass article A, and therefore also the various steps of the process for moulding and producing such article A by the same moulding and production apparatus 10.

In particular, Fig. 1 - section (a) shows for clarity the moulding apparatus 10 of the invention, in section and in a broken-out form, with the different parts separated from each other, so as to point out that, in the apparatus 10, the pressing member 13 is arranged above the forming member 12 and the preparatory mould 11.

Fig. 1 - section (b) in turn shows the same apparatus 10, in an initial step, in which it is arranged to receive a drop of glass, in the molten state, indicated with G.

As can be seen from this Fig. 1 - section (b), in this initial step, the apparatus 10 has a corresponding initial configuration, closed, suitable for receiving the glass drop G, in the molten state, which falls from above as indicated by an arrow f1, wherein in this initial configuration the two parts 11a, 11 b of the preparatory mould 11 and the two parts 12a, 12b of the forming member 12 are arranged side by side and closed one against the other, and the forming member 12 engages with its two parts or halves 12a, 12b the preparatory mould 11.

Fig. 1 - section (c) shows the apparatus 10 in a further subsequent step in which the pressing member 13 is moved in a known manner, i.e. by means of known movement means and devices and therefore not shown in the drawings, downwards, as indicated by an arrow f2, in order to close against the forming member 12 and therefore compress and expand the glass drop G deposited on the bottom of the preparatory mould 11.

Fig. 1 - section (d) shows how the glass drop G, in the molten state, due to the action and pressure applied by the pressing member 13, effectively expands and fills, in the moulding apparatus 10, the space and cavity defined by the preparatory mould 11, the forming member 12, and by the pressing member 13, closed against the forming member 12 itself, so as to mould and form the hollow glass article A.

As can be seen from Fig. 1 - section (d), during the axial downward movement, as indicated by the arrow f2, of the assembly formed by the support body 13a and the forming body 13b, the guide element 13c of the pressing member 13 at a certain moment meets and therefore stops against the forming member 12, which surmounts the preparatory mould 11.

Subsequently, again as shown in Fig. 1 - section (d), the forming body 13b, integral with the support body 13a, continues to descend downwards for a certain length, sliding with respect to the guide element 13c stopped against the forming member 12, in contrast to the action and the elastic force applied by the elastic means 13d interposed between the same guide element 13c and the support body 13a of the pressing member 13, integral with the forming body 13b, until the forming body 13b stops, with a respective projection 13b", against the guide element 13c arrested against the forming member 12.

In this way, the forming body 13b of the pressing member 13 completes its downward movement so as to completely fill with the glass drop G, in the molten state, the cavity defined by the forming surface 13b' of the same forming body 13b, and by the two parts 11a-11b and 12a-12b, arranged side by side and closed against each other, respectively of the preparatory mould 11 and of the forming member 12, and thus form and mould the hollow glass article A.

Next, as shown in Fig. 1-section (e), the pressing unit 13 is extracted and raised with respect to the forming member 12 and the preparatory mould 11, as indicated by an arrow f3, so as to free the area above the group formed by these two parts.

At the same time, the two parts 12a and 12b of the forming member 12 are separated and spaced apart from each other, as indicated by arrows f4.

Then, the preparatory mould 11, with the respective two parts 11a, 11b closed against each other so as to firmly hold the hollow glass article A, already formed, is overturned and transferred in the free air, in the moulding apparatus 10, into the area of the finishing mould 14, as indicated by arrows f5, by means of an overturning device or mechanism having known characteristics, therefore not described and not shown in detail in the drawings, and only schematized in Fig. 1 - section (e) with a fulcrum F corresponding to the center of rotation of the overturning movement, controlled by this known device or mechanism, of the preparatory mould 11 which holds the hollow glass article A.

In this way, again as shown in Fig. 1 - section (e), the hollow glass article A, already formed, held by the preparatory mould 11, is cooled in the free air and is rested, after being overturned, in the area of the respective cavity A', on the finishing mould 14.

Next, as shown in Fig. 1- section. (f), the two parts 11a, 11b of the preparatory mould 11 are separated and spaced apart from each other, as indicated by arrows f6, so as to free the hollow glass article A, resting and held on the finishing mould 14.

In this way, as shown in Fig. 1-section (g), the fully formed hollow glass article A is removed and extracted from the finishing mould 14, as schematized by an arrow f7, after the article A has cooled sufficiently.

In order to highlight the special configuration and details of the moulding apparatus 10 of the invention, the assembly formed by the preparatory mould 11, the forming member 12 and the pressing member 13, is shown, in Fig. 1 - section (h), in longitudinal section, along two longitudinal planes perpendicular to each other, with the inclusion of the hollow glass article A formed by this assembly.

In particular, Fig. 1 - section (h) shows for clarity the sliding, corresponding to a distance indicated with H, of the pins 13c', integral with the guide element 13c, in the flange 13a' of the support body 13a, when this guide element 13c encounters and stops against the forming member 12, during the axial downward movement of the pressing member 13 to close against the assembly formed by the preparatory mould 11 and the forming member 12.

Fig. 1 - section (i) in turn shows in an enlarged scale and with some parts in section, the hollow glass article A, already formed, held by the finishing mould 14 in the final step of the respective moulding process.

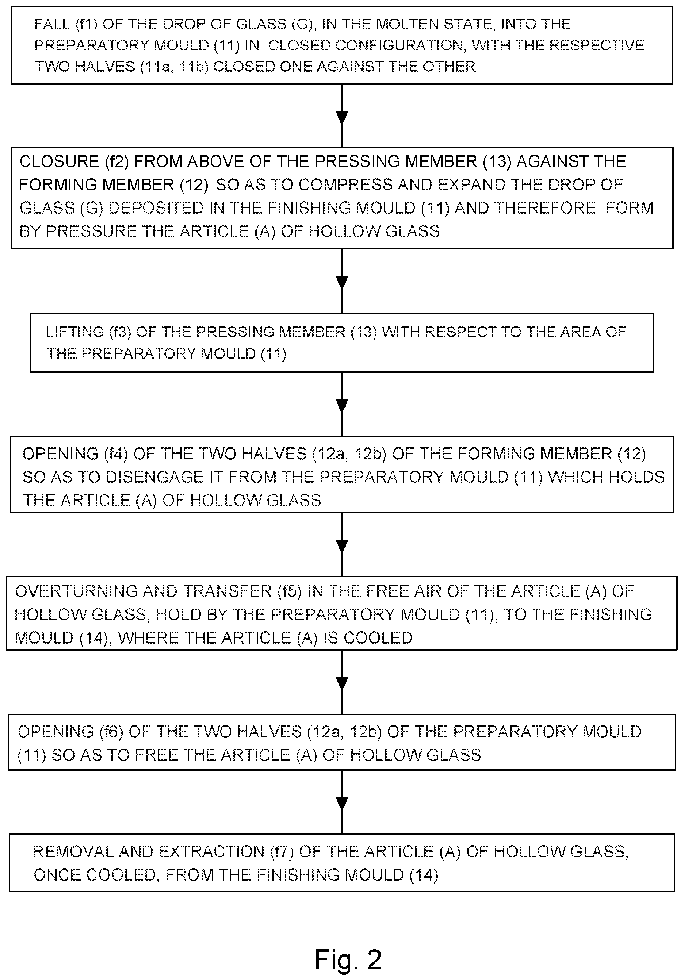

Furthermore, in addition to the previous description of the different and subsequent configurations, as shown in Fig. 1, assumed by the moulding apparatus 10 of the invention during the moulding and production of hollow glass, the block operating diagram of Fig. 2 illustrates the various steps of a corresponding process, also object of the present invention, implemented by such moulding apparatus 10, for the moulding and production of a hollow glass article, or in general of hollow glass.

Fig. 3, divided into sections (a)-(c), in turn, shows in plan view and in longitudinal section the hollow glass article A, made with the process and the corresponding moulding apparatus 10 of the invention, described above, in particular consisting of a glass cap or stopper A having a cavity A' and a ring-shaped protuberance A".

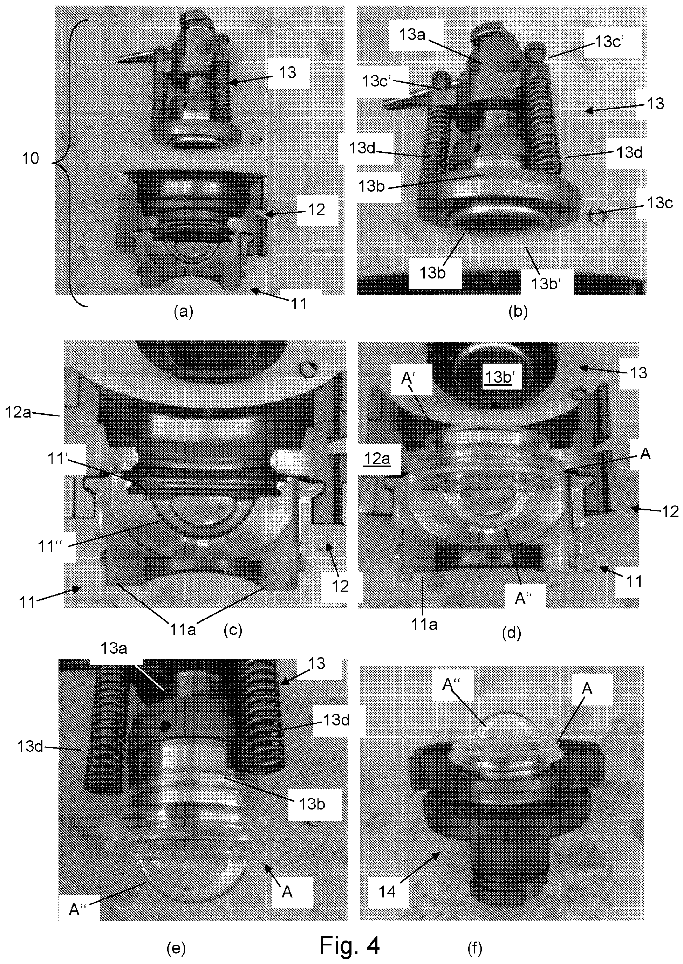

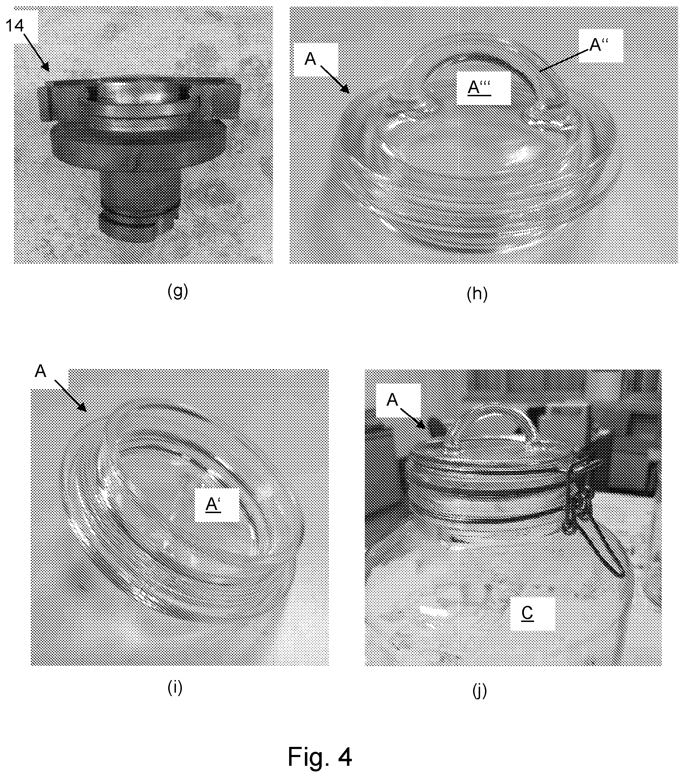

Finally, for greater clarity and to provide an even more complete information, Fig. 4, divided into sections (a)-(j), show a series of photographic images, illustrated in the following table, of the various parts of a prototype of the moulding apparatus 10 of the invention, and an example of a hollow glass article A, in particular consisting of a cap or stopper with a protuberance shaped like a ring, moulded and produced with this moulding apparatus 10.

| Section of Fig. 4 | Description of the photographic image |
|---|---|
| (a) | Overall view of the moulding apparatus 10, with the group consisting of the preparatory mould 11 and the forming member 12 separated from the pressing member 13 |
| (b) | Detailed image of the pressing member 13 which closes on the group made up of the preparatory mould 11 and the forming member 12 |
| (c) | Detailed image of a part 11a of the two separable parts 11a, 11b of the preparatory mould 11, showing the cavity 11", of the same preparatory mould 11, for forming the ring-shaped protuberance A" of the hollow glass article A |
| (d) | Same image as Fig. 4 - sec. (c), with the hollow glass article A held by the preparatory mould 11 |
| (e) | Enlarged image of the forming body 13b, of the pressure member 13, coupled with the hollow glass article A moulded by pressure by the pressing member 13 |
| (f) | Image of the finishing mould 14 which receives the hollow glass article A, once moulded, where this article A cools down |
| (g) | Image of the finishing mould 14 without the hollow glass article A |
| (h) | First image of the article A, moulded with the moulding apparatus 10, consisting of a glass cap or stopper, where this first image shows an upper side of the glass cap exhibiting a ring-shaped protuberance A" |
| (i) | Second image of the article A, moulded with the moulding apparatus 10, consisting of a glass cap or stopper, wherein this second image shows an underside of the glass cap exhibiting a cavity A' |
| (j) | Image of the hollow glass cap or stopper A, moulded with the apparatus 10, coupled with a container C |

It is therefore clear that both the process of the invention for the production of hollow glass, in particular a glass cap or stopper with a cavity on one side and a shaped protuberance on an opposite side, and the corresponding moulding apparatus, fully achieve the objects that have been set.

In particular, thanks to this innovative process, the shape of the hollow glass article A or of the glass cap, including the respective cavity on one side and the shaped protuberance on an opposite side, is realized and produced directly by means of the action of the upper pressing member 13, which closes on the lower preparatory mould 11.

Therefore, the hollow glass article A, once fully formed by the pressure applied by the pressing member 13 to the glass drop G in the molten state deposited in the preparatory mould 11, is inverted, overturned and transferred into the finishing mould 14 only in order to cool it.

It also follows that the process of the invention advantageously allows to produce a hollow glass article without using and resorting to blowing technology, as in conventional blow-blow and press-blow methods.

## Claims

1. Process for moulding and producing an article (A) of hollow glass or hollow glass, in particular a glass cap (A) with a hollow area (A') and a shaped protuberance (A", A‴), comprising the following steps:
- providing a moulding apparatus (10) comprising:
- a preparatory mould (11), lower, that is arranged in a lower area of the moulding apparatus (10), composed of at least two parts (11a, 11b) adapted to be separated from each other, having a moulding surface (11'), upper, that is arranged in an upper area of the preparatory mould (11), and a cavity (11"), formed along said moulding surface (11'), respectively defining an external shape (A^{IV}) and a shaped protuberance (A") of an article (A) of hollow glass to be moulded and produced by said moulding apparatus (10);
- a forming member (12), composed of at least two parts (12a, 12b) adapted to be separated from each other, which surmounts and engages the preparatory mould (11);
- a pressing member (13) or plunger, upper, that is arranged in an upper area of the moulding apparatus (10); and
- a finishing mould (14);
- depositing (f1) a drop of glass (G) in the molten state in the preparatory mould (11);
- closing (f2) the pressing member (13), upper, against the preparatory mould (11), lower, with the interposition of the glass drop (G), so as to form directly by pressure, by the moulding surface (11') of the preparatory mould (11) and by the respective cavity (11"), the final external shape (A^{IV}) and the protuberance (A"), and, by the pressing member (13), the hollow area (A') of the hollow glass article (A);
- extracting (f3) the pressing member (13);
- opening (f4) the two parts (12a, 12b) of the forming member (12), so as to disengage it from the preparatory mould (11) which holds the hollow glass article (A), thus formed;
- overturning (f5) the hollow glass article (A), holding it and moving it with the preparatory mould (11), and transferring it (f5) to the finishing mould (14), in order to allow the hollow glass article (A), already formed, to cool;
- opening (f6) the two parts (11a, 11b) of the preparatory mould (11), in order to free the hollow glass article (A); and
- extracting (f7) the hollow glass article (A), once cooled, from the finishing mould (14);
wherein said pressing member (13) comprises:
- a support body (13a);
- a forming body (13b), fixed to and integral with said support body (13a), having a forming surface (13b') suitable for forming by pressure the hollow area (A') of the hollow glass article (A);
- a guiding element (13c), able to guide the forming body (13b) and at the same time to allow a relative movement between the latter and the guiding element (13c), during the closing of the pressing member (13) against the preparatory mould (11) and the forming member (12) for moulding the hollow glass article (A); and
- elastic means (13d) interposed between the guide element (13c) and the support body (13a) of the pressing member (13); and
wherein said elastic means (13d), interposed between the guide element (13c) and the support body (13a) of the pressing member (13), are configured so as to oppose the relative movement of the forming body (13b ) with respect to the guiding element (13c) of the pressing member (13), when, in the use and operation of the moulding apparatus (10), the guiding element (13c) stops against the forming member (12) during the downward axial movement (f2) of the pressing member (13) to close against the forming member (12) and the preparatory mould (11) in order to form and mould the article (A) of hollow glass.

2. Process for moulding and producing a hollow glass article (A) according to claim 1, wherein said guiding element (13c) of the pressing member (13), in order to allow said relative movement between said forming body (13b) and the same guide element (13c), is connected slidingly with the support body (13a), integral with the forming body (13b), of the pressing member (13), by means of a plurality of pins (13c'), integral with the guide element (13c), able to slide in corresponding holes formed in a flange (13a') of the support body (13a).

3. Process for moulding and producing a hollow glass article (A) according to claim 1 or 2, wherein said elastic means, interposed between the guide element (13c) and the support body (13a) of the pressing member (13), comprise one or more compression coil springs (13d).

4. Process for moulding and producing a hollow glass article according to any one of the preceding claims, wherein the two parts (11a, 11b), separable from each other, of the preparatory mould (11), lower, and the cavity (11"), formed along the respective moulding surface (11'), are configured so as to form the shaped protuberance (A"), of the hollow glass item (A), with a through hole (A‴), so that the shaped protuberance is similar to a ring.

5. Moulding apparatus (10) for moulding and producing an article (A) of hollow glass or hollow glass, in particular of a glass cap (A) with a hollow area (A') and a shaped protuberance (A", A‴), comprising
- a preparatory mould (11), lower, that is arranged in a lower area of the moulding apparatus (10), composed of at least two parts (11a, 11b) that can be separated from each other, having a moulding surface (11 ') and a cavity (11"), formed along said moulding surface (11'), respectively defining an external shape (A^{iv}) and a shaped protuberance (A") of a hollow glass article (A) to be moulded and produced by said moulding apparatus (10);
- a forming member (12), composed of at least two parts (12a, 12b) which can be separated from each other, which surmounts and engages the preparatory mould (11);
- a pressing member (13) or plunger, upper, that is arranged in an upper area of the moulding apparatus (10); and
- a finishing mould (14);
wherein said pressure member (13) is able to close (f2) against the preparatory mould (11), with the interposition of a drop of glass (G), in the fluid state, so as to form directly by pressure, by the moulding surface (11') of the preparatory mould (11) and by the respective cavity (11"), the final external shape (A^{IV}) and the protuberance (A", A‴), and, by the pressing member (13), the hollow area (A') of the hollow glass article (A);
wherein said pressure member (13) is able to be subsequently extracted and removed (f3) from the area of said preparatory mould (11), after the formation by pressure of the hollow glass article (A);
wherein the two parts (12a, 12b) of the forming member (12) are able to open and separate (f4) each from other, after removing the pressing member (13), so as to disengage the forming member (12) from the preparatory mould (11) which holds the hollow glass article (A), once formed;
wherein said preparatory mould (11), together with the hollow glass article (A), already formed, held by the same preparatory mould (11), is able to be moved and overturned so as to transfer (f5) the hollow glass article (A) to the finishing mould (14), in order to allow cooling of the same hollow glass article (A);
wherein the two parts (11a, 11b) of the preparatory mould (11) are able to open (f6) each from other, once the hollow glass article (A) has cooled, so as to allow extraction and removal (f7) the hollow glass item (A) from the finishing mould (14);
wherein said pressing member (13) comprises:
- a support body (13a);
- a forming body (13b), fixed to and integral with said support body (13a), having a forming surface (13b') suitable for forming the hollow area (A') of the hollow glass article (A);
- a guiding element (13c), able to guide the forming body (13b) and at the same time to allow a relative movement between the latter and the guiding element (13c), during the closing of the pressing member (13) against the preparatory mould (11) and the forming member (12) for moulding the hollow glass article (A); and
- elastic means, for example comprising one or more compression helical springs (13d), interposed between the guide element (13c) and the support body (13a) of the pressing member (13); and
wherein said elastic means (13d), interposed between the guide element (13c) and the support body (13a) of the pressing member (13), are configured so as to oppose the relative movement of the forming body (13b) with respect to the guiding element (13c) of the pressing member (13), when, in the use and operation of the moulding apparatus (10), the guiding element (13c) stops against the forming (12) during the downward axial movement (f2) of the pressing member (13) to close against the forming member (12) and the preparatory mould (11) in order to form and mould the hollow glass article (A).

6. Moulding apparatus (10) according to claim 5, wherein said guiding element (13c) of the pressing member (13), in order to allow said relative movement between said forming body (13b) and the same guide element (13c), is connected slidingly with the support body (13a), integral with the forming body (13b) of the pressing member (13), by means of a plurality of pins (13c'), integral with the element guide (13c), adapted to slide in corresponding holes formed in a flange (13a') of the support body (13a).

7. Moulding apparatus (10) according to claim 5 or 6, wherein the two parts (11a, 11b), separable from each other, of the preparatory mould (11), and the cavity (11"), formed along the respective moulding surface (11'), are configured so as to form the shaped protuberance (A"), of the hollow glass item (A), with a through hole (A‴), so that the shaped protuberance is similar to a ring.

## Patentansprüche

1. **Verfahren** zum Formen und Produzieren eines Gegenstandes (A) aus Hohlglas oder von Hohlglas, insbesondere einer Glaskappe (A) mit einem hohlen Bereich (A') und einer geformten Ausstülpung (A", A‴), umfassend die folgenden Schritte:
- Bereitstellen eines Formapparates (10), umfassend:
- eine Vorform (11), unten, die in einem unteren Bereich des Formapparates (10) angeordnet ist, bestehend aus mindestens zwei Teilen (11a, 11b), die voneinander getrennt werden können und eine Formfläche (11'), oben, die in einem oberen Bereich der Vorform (11) angeordnet ist, und einen Hohlraum (11"), der entlang der Formfläche (11') ausgebildet ist, aufweisen, die jeweils eine externe Form (A^{IV}) und eine geformte Ausstülpung (A") eines Gegenstandes (A) aus Hohlglas definieren, der mit dem Formapparat (10) geformt und produziert werden soll;
- ein Formungsbauteil (12), das aus mindestens zwei Teilen (12a, 12b) besteht, die voneinander getrennt werden können, das über die Vorform (11) ragt und in diese eingreift;
- ein Pressbauteil (13) oder einen Stempel, oben, das/der in einem oberen Bereich des Formapparates (10) angeordnet ist; und
- eine Endform (14);
- Abscheiden (f1) eines Glastropfens (G) im geschmolzenen Zustand in der Vorform (11);
- Schließen (f2) des Pressbauteils (13), oben, gegen die Vorform (11), unten, mit dem dazwischenliegenden Glastropfen (G), sodass durch Druck, durch die Formfläche (11') der Vorform (11) und durch den entsprechenden Hohlraum (11") direkt die fertige externe Form (A^{IV}) und die Ausstülpung (A") und durch das Pressbauteil (13) der hohle Bereich (A') des Hohlglasgegenstandes (A) gebildet werden;
- Herausziehen (f3) des Pressbauteils (13);
- Öffnen (f4) der beiden Teile (12a, 12b) des Formungsbauteils (12), um es so von der Vorform (11), die den so geformten Hohlglasgegenstand (A) hält, zu lösen;
- Kippen (f5) des Hohlglasgegenstandes (A), Halten dieses und Bewegen dieses mit der Vorform (11) und Überführen (f5) dieses zu der Endform (14), damit der bereits gebildete Hohlglasgegenstand (A) abkühlen kann;
- Öffnen (f6) der beiden Teile (11a, 11b) der Vorform (11), um den Hohlglasgegenstand (A) freizugeben; und
- Herausziehen (f7) des abgekühlten Hohlglasgegenstandes (A) aus der Endform (14); wobei das Pressbauteil (13):
- einen Trägerkörper (13a);
- einen Formungskörper (13b), der an dem Trägerkörper (13a) fixiert ist und eine Einheit mit diesem bildet und eine Formungsfläche (13b') aufweist, mit der durch Druck der hohle Bereich (A') des Hohlglasgegenstandes (A) gebildet werden kann;
- ein Führungselement (13c), das während des Schließens des Pressbauteils (13) gegen die Vorform (11) und das Formungsbauteil (12) zum Formen des Hohlglasgegenstandes (A) den Formungskörper (13b) führen und gleichzeitig eine Relativbewegung zwischen letzterem und dem Führungselement (13c) zulassen kann; und
- elastische Mittel (13d), die zwischen dem Führungselement (13c) und dem Trägerkörper (13a) des Pressbauteils (13) eingeschoben sind, umfasst; und
wobei die zwischen dem Führungselement (13c) und dem Trägerkörper (13a) des Pressbauteils (13) eingeschobenen elastischen Mittel (13d) so konstruiert sind, dass sie der Relativbewegung des Formungskörpers (13b) in Bezug auf das Führungselement (13c) des Pressbauteils (13) entgegenwirken, wenn bei der Verwendung und im Betrieb des Formapparates (10) das Führungselement (13c) während der axialen Abwärtsbewegung (f2) des Pressbauteils (13) an das Formungsbauteil (12) anschlägt, um gegen das Formungsbauteil (12) und die Vorform (11) zu schließen, um den Gegenstand (A) aus Hohlglas zu bilden und zu formen.

2. Verfahren zum Formen und Produzieren eines Hohlglasgegenstandes (A) nach Anspruch 1, wobei das Führungselement (13c) des Pressbauteils (13) mit dem Trägerkörper (13a) des Pressbauteils (13), der mit dem Formungskörper (13b) eine Einheit bildet, mittels einer Vielzahl von Stiften (13c'), die mit dem Führungselement (13c) eine Einheit bilden und in entsprechenden Löchern, die in einem Ansatz (13a') des Trägerkörpers (13a) ausgebildet sind, gleiten können, gleitfähig verbunden ist, um die Relativbewegung zwischen dem Formungskörper (13b) und selbigem Führungselement (13c) zuzulassen.

3. Verfahren zum Formen und Produzieren eines Hohlglasgegenstandes (A) nach Anspruch 1 oder 2, wobei die elastischen Mittel, die zwischen dem Führungselement (13c) und dem Trägerkörper (13a) des Pressbauteils (13) eingeschoben sind, eine oder mehrere Spiraldruckfedern (13d) umfassen.

4. Verfahren zum Formen und Produzieren eines Hohlglasgegenstandes nach einem der vorstehenden Ansprüche, wobei die beiden Teile (11a, 11b) der Vorform (11), unten, die voneinander getrennt werden können, und der Hohlraum (11"), der entlang der jeweiligen Formfläche (11') ausgebildet ist, so konstruiert sind, dass sie die geformte Ausstülpung (A") des Hohlglasgegenstandes (A) mit einer Durchgangsbohrung (A‴) bilden, sodass die geformte Ausstülpung einem Ring ähnelt.

5. Formungsapparat (10) zum Formen und Produzieren eines Gegenstandes (A) aus Hohlglas oder von Hohlglas, insbesondere einer Glaskappe (A) mit einem hohlen Bereich (A') und einer geformten Ausstülpung (A", A‴), umfassend
- eine Vorform (11), unten, die in einem unteren Bereich des Formapparates (10) angeordnet ist, bestehend aus mindestens zwei Teilen (11a, 11b), die voneinander getrennt werden können und eine Formfläche (11') und einen Hohlraum (11"), der entlang der Formfläche (11') ausgebildet ist, aufweisen, die jeweils eine externe Form (A^{IV}) und eine geformte Ausstülpung (A") eines Hohlglasgegenstandes (A) definieren, der mit dem Formapparat (10) geformt und produziert werden soll;
- ein Formungsbauteil (12), das aus mindestens zwei Teilen (12a, 12b) besteht, die voneinander getrennt werden können, das über die Vorform (11) ragt und in diese eingreift;
- ein Pressbauteil (13) oder einen Stempel, oben, das/der in einem oberen Bereich des Formapparats (10) angeordnet ist; und
- eine Endform (14);
wobei das Pressbauteil (13) gegen die Vorform (11) mit dem dazwischenliegenden Glastropfen (G) im flüssigen Zustand schließen kann (f2), sodass durch Druck, durch die Formfläche (11') der Vorform (11) und durch den entsprechenden Hohlraum (11") direkt die fertige externe Form (A^{IV}) und die Ausstülpung (A", A‴) und durch das Pressbauteil (13) der hohle Bereich (A') des Hohlglasgegenstandes (A) gebildet werden;
wobei das Pressbauteil (13) anschließend nach der Bildung des Hohlglasgegenstandes (A) aus dem Bereich der Vorform (11) herausgezogen und entfernt werden kann (f3);
wobei sich die beiden Teile (12a, 12b) des Formungsbauteils (12) öffnen und voneinander trennen können (f4), nachdem das Pressbauteil (13) entfernt worden ist, um so das Formungsbauteil (12) von der Vorform (11), die den so geformten Hohlglasgegenstand (A) hält, zu lösen;
wobei die Vorform (11) zusammen mit dem bereits gebildeten Hohlglasgegenstand (A), der von selbiger Vorform (11) gehalten wird, bewegt und gekippt werden kann, um so den Hohlglasgegenstand (A) zu der Endform (14) zu überführen (f5), damit der bereits gebildete Hohlglasgegenstand (A) abkühlen kann; wobei sich die beiden Teile (11a, 11b) der Vorform (11) voneinander öffnen können (f6), nachdem der Hohlglasgegenstand (A) abgekühlt ist, um so den Hohlglasgegenstand (A) aus der Endform (14) herauszuziehen und zu entfernen (f7); wobei das Pressbauteil (13):
- einen Trägerkörper (13a);
- einen Formungskörper (13b), der an dem Trägerkörper (13a) fixiert ist und eine Einheit mit diesem bildet und eine Formungsfläche (13b') aufweist, mit der der hohle Bereich (A') des Hohlglasgegenstandes (A) gebildet werden kann;
- ein Führungselement (13c), das während des Schließens des Pressbauteils (13) gegen die Vorform (11) und das Formungsbauteil (12) zum Formen des Hohlglasgegenstandes (A) den Formungskörper (13b) führen und gleichzeitig eine Relativbewegung zwischen letzterem und dem Führungselement (13c) zulassen kann; und
- elastische Mittel (13d), die beispielsweise eine oder mehrere Spiraldruckfedern umfassen und zwischen dem Führungselement (13c) und dem Trägerkörper (13a) des Pressbauteils (13) eingeschoben sind, umfasst; und
wobei die zwischen dem Führungselement (13c) und dem Trägerkörper (13a) des Pressbauteils (13) eingeschobenen elastischen Mittel (13d) so konstruiert sind, dass sie der Relativbewegung des Formungskörpers (13b) in Bezug auf das Führungselement (13c) des Pressbauteils (13) entgegenwirken, wenn bei der Verwendung und im Betrieb des Formapparats (10) das Führungselement (13c) während der axialen Abwärtsbewegung (f2) des Pressbauteils (13) an das Formungsbauteil (12) anschlägt, um gegen das Formungsbauteil (12) und die Vorform (11) zu schließen, um den Gegenstand (A) aus Hohlglas zu bilden und zu formen.

6. Formungsapparat (10) nach Anspruch 5, wobei das Führungselement (13c) des Pressbauteils (13) mit dem Trägerkörper (13a) des Pressbauteils (13), der mit dem Formungskörper (13b) eine Einheit bildet, mittels einer Vielzahl von Stiften (13c'), die mit dem Führungselement (13c) eine Einheit bilden und in entsprechenden Löchern, die in einem Ansatz (13a') des Trägerkörpers (13a) ausgebildet sind, gleiten können, gleitfähig verbunden ist, um die Relativbewegung zwischen dem Formungskörper (13b) und selbigem Führungselement (13c) zuzulassen.

7. Formungsapparat (10) nach Anspruch 5 oder 6, wobei die beiden Teile (11a, 11b) der Vorform (11), die voneinander getrennt werden können, und der Hohlraum (11"), der entlang der jeweiligen Formfläche (11') ausgebildet ist, so konstruiert sind, dass sie die geformte Ausstülpung (A") des Hohlglasgegenstandes (A) mit einer Durchgangsbohrung (A‴) bilden, sodass die geformte Ausstülpung einem Ring ähnelt.

## Revendications

1. Procédé de moulage et de production d'un article (A) en verre creux ou de verre creux, en particulier d'un capuchon (A) en verre ayant une zone (A') creuse et une protubérance (A'', A‴) conformée, comprenant les stades suivants :
- se procurer une installation (10) de moulage, comprenant :
- un moule (11) préparatoire, inférieur, qui est disposé dans une zone inférieure de l'installation (10) de moulage, qui est composé d'au moins deux parties (11a, 11b) propres à être séparées l'une de l'autre, ayant une surface (11') de moulage, supérieure, qui est disposée dans une zone supérieure du moule (11) préparatoire, et une empreinte (11"), formée le long de ladite surface (11') de moulage, définissant respectivement une forme (A^{IV}) extérieure et une protubérance (A'') conformée d'un article (A) en verre creux à mouler et à produire par ladite installation (10) de moulage ;
- un élément (12) de formage, qui est composé d'au moins deux parties (12a, 12b), propres à être séparées l'une de l'autre, et qui surmonte le moule (11) préparatoire et y pénètre ;
- un élément (13) de pression ou plongeur, supérieur, qui est disposé dans une zone supérieure de l'installation (10) de moulage ; et
- un moule (14) de finition ;
- déposer (f1) une goutte de verre (G) à l'état fondu dans le moule (11) préparatoire ;
- fermer (f2) l'élément (13) de pression, supérieur, sur le moule (11) préparatoire, inférieur, avec l'interposition de la goutte (G) de verre, de manière à former directement par pression par la surface (11') de moulage du moule (11) préparatoire et par l'empreinte (11'') respective, la forme (A^{IV}) extérieure finale et la protubérance (A'') et, par l'élément (13) de pression, la zone (A') creuse de l'article (A) en verre creux ;
- extraire (f3) l'élément (13) de pression ;
- ouvrir (f4) les deux parties (12a, 12b) de l'élément (12) de formage, de manière à le sortir du moule (11) préparatoire, qui maintient l'article (A) en verre creux, ainsi formé ;
- renverser (f5) l'article (A) en verre creux, en le tenant et en le déplaçant avec le moule (11) préparatoire, et le transférer (f5) au moule (14) de finition, afin de permettre à l'article (A) en verre creux, déjà formé, de se refroidir ;
- ouvrir (f6) les deux parties (11a, 11b) du moule (11) préparatoire, afin de libérer l'article (A) en verre creux ; et
- extraire (f7) l'article (A) en verre creux, une fois refroidi, du moule (14) de finition ;
dans lequel l'élément (13) de pression, comprend :
- un corps (13a) formant support ;
- un corps (13b) de formage, fixé audit corps (13a) formant support et d'une pièce avec lui, ayant une surface (13b') de formage propre à former par pression la zone (A') creuse de l'article (A) en verre creux ;
- un élément (13c) de guidage, apte à guider le corps (13b) de formage et en même temps à permettre un mouvement relatif entre ce dernier et l'élément (13c) de guidage, pendant la fermeture de l'élément (13) de pression sur la moule (11) préparatoire et l'élément (12) de formage pour mouler l'article (A) en verre creux ; et
- des moyens (13d) élastiques interposés entre l'élément (13c) de guidage et le corps (13a) formant support de l'élément (13) de pression ; et
dans lequel lesdits moyens (13d) élastiques, interposés entre l'élément (13c) de guidage et le corps (13a) formant support de l'élément (13) de pression, sont configurés pour s'opposer au mouvement relatif du corps (13b) de formage par rapport à l'élément (13c) de guidage de l'élément (13) de pression, lorsque, en fonctionnement de l'installation (10) de moulage, l'élément (13c) de guidage s'arrête sur l'élément (12) de formage pendant le mouvement (f2) axial vers le bas de l'élément (13) de pression pour se fermer sur l'élément (12) de formage et le moule (11) préparatoire afin de former et mouler l'article (A) en verre creux.

2. Procédé de moulage et de production d'un article (A) en verre creux suivant la revendication 1, dans lequel ledit élément (13c) de guidage de l'élément (13) de pression est, afin de permettre ledit mouvement relatif entre le corps (13b) de formage et le même élément (13c) de guidage, coulissant avec le corps (13a) formant support, d'une pièce avec le corps (13b) de formage de l'élément (13) de pression, au moyen d'une pluralité de broches (13c'), d'une pièce avec l'élément (13c) de guidage, aptes à coulisser dans des trous correspondants formés dans une bride (13a') du corps (13a) formant support.

3. Procédé de moulage et de production d'un article (A) en verre creux suivant la revendication 1 ou 2, dans lequel lesdits moyens élastiques, interposés entre l'élément (13c) de guidage et le corps (13a) formant support de l'élément (13) de pression, comprennent un ou plusieurs ressorts (13d) hélicoïdaux de compression.

4. Procédé de moulage et de production d'un article en verre creux suivant l'une quelconque des revendications précédentes, dans lequel les deux parties (11a, 11b), séparables l'une de l'autre, du moule (11) préparatoire, inférieur, et l'empreinte (11''), formée suivant la surface (11') de moulage respective, sont configurées de manière à former la protubérance (A'') conformée de l'article (A) en verre creux, avec un trou (A‴) traversant, en sorte que la protubérance conformée est semblable à une bague.

5. Installation (10) de moulage pour mouler et produire un article (A) en verre creux ou du verre creux, en particulier un capuchon (A) en verre ayant une zone (A') creuse et une protubérance (A'', A‴) conformée, comprenant :
- un moule (11) préparatoire, inférieur, qui est disposé dans une zone inférieure de l'installation (10) de moulage, qui est composé d'au moins deux parties (11a, 11b) propres à être séparées l'une de l'autre, ayant une surface (11') de moulage, supérieure, et une empreinte (11"), formée le long de ladite surface (11') de moulage, définissant respectivement une forme (A^{IV}) extérieure et une protubérance (A'') conformée d'un article (A) en verre creux à mouler et à produire par ladite installation (10) de moulage ;
- un élément (12) de formage, qui est composé d'au moins deux parties (12a, 12b), propres à être séparées l'une de l'autre, et qui surmonte le moule (11) préparatoire et y pénètre ;
- un élément (13) de pression ou plongeur, supérieur, qui est disposé dans une zone supérieure de l'installation (10) de moulage ; et
- un moule (14) de finition ;
dans lequel ledit élément (13) de pression est apte à se fermer (f2) sur le moule (11) préparatoire, avec l'interposition d'une goutte de verre (G), dans l'état fluide, de manière à former directement par pression, par la surface (11') de moulage du moule (11) préparatoire et par l'empreinte (11'') respective, la forme (A^{IV}) extérieure finale et la protubérance (A", A‴) et, par l'élément (13) de pression, la zone (A') creuse de l'article (A) en verre creux ;
dans lequel ledit élément (13) de pression est apte à être ensuite extrait et retiré (f3) de la zone dudit moule (11) préparatoire, après la formation par pression de l'article (A) en verre creux ;
dans lequel les deux parties (12a, 12b) de l'élément (12) de formage sont aptes à s'ouvrir et à se séparer (f4) l'une de l'autre, après retrait de l'élément (13) de pression, de manière à dégager l'élément (12) de formage du moule (11) préparatoire, qui maintient l'article (A) en verre creux, une fois formé ;
dans lequel ledit moule (11) préparatoire, ensemble avec l'article (A) en verre creux, déjà formé, maintenu par le même moule (11) préparatoire, est apte à être déplacé et retourné, de manière à transférer (f5) l'article (A) en verre creux au moule (14) de finition, afin de permettre un refroidissement du même article (A) en verre creux ;
dans lequel les deux parties (11a, 11b) du moule (11) préparatoire sont aptes à s'ouvrir (f6) l'une de l'autre, une fois que l'article (A) en verre creux s'est refroidi, de manière à permettre l'extraction et le retrait (f7) de l'article (A) en verre creux du moule (14) de finition ;
dans lequel l'élément (13) de pression comprend :
- un corps (13a) formant support ;
- un corps (13b) de formage, fixé audit corps (13a) formant support d'une pièce avec lui, ayant une surface (13b') de formage propre à former par pression la zone (A') creuse de l'article (A) en verre creux ;
- un élément (13c) de guidage, apte à guider le corps (13b) de formage et en même temps à permettre un mouvement relatif entre ce dernier et l'élément (13c) de guidage, pendant la fermeture de l'élément (13) de pression sur le moule (11) préparatoire et l'élément (12) de formage pour mouler l'article (A) en verre creux ; et
- des moyens (13d) élastiques interposés entre l'élément (13c) de guidage et le corps (13a) formant support de l'élément (13) de pression ; et
dans lequel lesdits moyens (13d) élastiques, interposés entre l'élément (13c) de guidage et le corps (13a) formant support de l'élément (13) de pression, sont configurés pour s'opposer au mouvement relatif du corps (13b) de formage par rapport à l'élément (13c) de guidage de l'élément (13) de pression, lorsque, en fonctionnement de l'installation (10) de moulage, l'élément (13c) de guidage s'arrête sur l'élément (12) de formage pendant le mouvement (f2) axial vers le bas de l'élément (13) de pression pour se fermer sur l'élément (12) de formage et le moule (11) préparatoire afin de former et mouler l'article (A) en verre creux.

6. Installation (10) de moulage suivant la revendication 5, dans lequel ledit élément (13c) de guidage de l'élément (13) de pression est, afin de permettre ledit mouvement relatif entre le corps (13b) de formage et le même élément (13c) de guidage, coulissant avec le corps (13a) formant support, d'une pièce avec le corps (13b) de formage de l'élément (13) de pression, au moyen d'une pluralité de broches (13c'), d'une pièce avec l'élément (13c) de guidage, aptes à coulisser dans des trous correspondants formés dans une bride (13a') du corps (13a) formant support.

7. Installation (10) de moulage suivant la revendication 5 ou 6, dans lequel les deux parties (11a, 11b), séparables l'une de l'autre, du moule (11) préparatoire, inférieur, et l'empreinte (11''), formée suivant la surface (11') de moulage respective, sont configurées de manière à former la protubérance (A'') conformée de l'article (A) en verre creux, avec un trou (A''') traversant, en sorte que la protubérance conformée est semblable à une bague.
